# EUROPÄISCHE PATENTSCHRIFT

(11) **EP 3 934 930 B1**
(45) Veröffentlichungstag und Bekanntmachung des Hinweises auf die Patenterteilung: **24.05.2023**
(21) Anmeldenummer: 20710054.6
(22) Anmeldetag: 20.02.2020
(51) Int. Cl.: B60K 37/06, H01H 3/12, H01H 13/14

(54) **SCHALTUNGSANORDNUNG**
CIRCUIT ARRANGEMENT
CIRCUIT

(30) Priorität: 06.03.2019 DE 102019203031
(43) Veröffentlichungstag der Anmeldung: 12.01.2022
(73) Patentinhaber: VOLKSWAGEN AKTIENGESELLSCHAFT, 38440 Wolfsburg (DE)
(72) Erfinder: THRIEN, Markus, 45968 Gladbeck (DE)
(86) Internationale Anmeldenummer: PCT/EP2020/054554
(87) Internationale Veröffentlichungsnummer: WO 2020/178041

(56) Entgegenhaltungen:
- EP-A1- 2 449 448
- EP-B1- 2 449 448
- DE-A1-102016 123 411
- DE-B3-102017 220 780

## Beschreibung

Die Erfindung betrifft eine Schaltungsanordnung gemäß dem Oberbegriff des Patentanspruchs 1, ein Bediensystem gemäß dem Oberbegriff des Patentanspruchs 8 und ein Fahrzeug gemäß dem Oberbegriff des Patentanspruchs 9.

Die DE 103 26 400 A1 offenbart beispielsweise ein Bedienelement für eine Stelleinrichtung. Dabei ist ein Stellsignal abhängig von einem Druck erzeugbar, der auf eine Bedienfläche ausgeübt wird.

Aus der WO 2018/193549 A1 geht eine Schalterstruktur für Touchscreens hervor. Dabei ist ein mechanisch schaltbares Element relativ zu dem Touchscreen elastisch gelagert.

Die WO 2016/012277 A1 offenbart eine Bedieneinheit. Wird ein Bedienfeld mit einer Betätigungskraft senkrecht zur Oberfläche beaufschlagt, erfolgt eine force-feedback-Reaktion.

Aus der DE 10 2015 222 714 A1 ist eine Bedieneinrichtung bekannt, mit einem großflächigen Bedienelement. Das Bedienelement ist derart gelagert, dass dessen Betätigung zu einer Hubbewegung führt, die zusätzlich von einer Rotationsbewegung überlagert ist.

Die DE 10 2015 216 709 A1 beschreibt eine Schalteranordnungsbaugruppe, bei der über einen Touchscreen eine Funktion auswählbar ist. Die Aktivierung der Funktion erfolgt dadurch, dass der Touchscreen eine berührungsbedingte Kippbewegung ausführt und dabei einen taktilen Schalter betätigt.

DE 10 2017 220 780 B3 offenbart eine Schaltungsanordnung mit einem Trägerelement, einem berührungssensitiven Bedienelement, einem mechanischen Schaltelement und einer Schaltungskinematik, über die das Bedienelement und das Trägerelement relativ zueinander verlagerbar sind. Die Schaltungskinematik umfasst Hebel, die sich von einem Kipppunkt aus jeweils in eine erste Richtung und eine dazu entgegengesetzte andere Richtung erstrecken. Das Schaltelement ist im Bereich der Hebelenden angeordnet.

DE 10 2016 123 411 A1 offenbart eine Bedienvorrichtung mit Wippelement zum Bedienen von mindestens einem elektrischen Gerät in einem Kraftfahrzeug. Die Bedienvorrichtung weist ein Wippelement auf, welches zur Betätigung eines Schaltelements ausgebildet ist.

EP 2 449 448 B1 offenbart eine Schaltungsanordnung mit einem flachen Bedienfeld, einem auf einer darunterliegenden Armatur angeordneten Schalter, der zwei Schneidkontakte aufweist.

Der Erfindung liegt nun die Aufgabe zugrunde, eine technische Lösung für eine mechanisch schaltbare berührungssensitive Bedienoberfläche zu schaffen, deren mechanische Schaltkraft konstant und deren mechanischer Schaltweg gering ist und die außerdem sehr flexibel ist.

Die Aufgabe wird durch die Gegenstände der unabhängigen Patentansprüche 1, 8 und 9 gelöst.

Weitere bevorzugte Ausgestaltungen der Erfindung ergeben sich aus den übrigen, in den Unteransprüchen genannten Merkmalen.

Ein erster Aspekt der Erfindung betrifft eine Schaltungsanordnung, umfassend wenigstens:
- ein Trägerelement;
- ein berührungssensitives Bedienelement;
- ein mechanisches Schaltelement, das zwischen dem Bedienelement und dem Trägerelement angeordnet ist und das eine Rückstellkraft zu erzeugen vermag; und
- eine Schaltungskinematik, über die das Bedienelement und das Trägerelement in einer Linearbewegung relativ zueinander verlagerbar sind.

Die Schaltungskinematik umfasst einen Hebel, der sich von seinem Kipppunkt aus in eine Richtung und eine andere Richtung erstreckt und der Kipppunkt des Hebels an dem Trägerelement befestigt ist und der Hebel in der einen Richtung gelenkig mit dem Bedienelement verbunden ist. Der Hebel weist in der anderen Richtung einen Endabschnitt auf, der mit einem Verzahnungsprofil versehen ist.

Weiterhin umfasst die Schaltungskinematik einen weiteren Hebel, der komplementär zu dem Hebel ausgebildet und kinematisch spiegelbildlich zu diesem angeordnet und gelagert ist und dessen Verzahnungsprofil mit dem Verzahnungsprofil des Hebels im Eingriff ist.

Erfindungsgemäß ist vorgesehen, dass das mechanische Schaltelement entlang der anderen Richtung zwischen dem Hebel und dem Bedienelement angeordnet ist, wobei das Schaltelement nicht im Bereich eines Endabschnitts des Hebels angeordnet ist.

Da das mechanische Schaltelement nicht direkt über ein Niederdrücken des Bedienelements betätigt wird, sondern eine Bedienkraft durch einen Bediener auf das Bedienelement aufgebracht wird und dann über ein ungleichförmiges Getriebe indirekt auf das Schaltelement übertragen wird, kann eine gewünschte Übersetzung der Bedienkraft und auch eines Bedienwegs eingestellt werden. Insbesondere kann die Übersetzung durch Wahl einer Position des Schaltelements entlang der anderen Richtung des Hebels angepasst werden. Der Fachmann greift dabei zur kinematischen und dynamischen Auslegung auf ihm an sich bekannte Hebelgesetze zurück und wählt dazu passend eine Charakteristik des mechanischen Schaltelements aus (beispielsweise Charakteristik von Rückstellkraft und Schaltweg). Auf diese Weise lässt sich ein berührungssensitives Bedienelement mit der Haptik eines mechanischen Schaltelements realisieren, dessen Hub äußerst gering ausgelegt sein kann und dessen erforderliche Bedienkraft an jeder Stelle auf dem Bedienelement nahezu konstant ist.

Das Bedienelement umfasst vorzugsweise ein großflächiges Bedienelement und kann auch mehrteilig aufgebaut sein. Beispielsweise kann es auch ein Gehäuse umfassen, in welches das großflächige Bedienelement eingefasst ist.

Das mechanische Schaltelement kann an dem Bedienelement befestigt sein und an dem Hebel anliegen oder umgekehrt. Vorzugsweise ist das Schaltelement am Bedienelement befestigt und bildet mit dem Bedienelement eine steife Baugruppe.

Besonders bevorzugt bilden das großflächige Bedienelement, das Gehäuse und das Schaltelement eine steife Baugruppe, die in sich bis zu einer Deformationskraft von 10 N oder mehr keine wesentliche Deformation erfährt.

Die Schaltungskinematik vermag die Linearbewegung zu lenken, mit anderen Worten eine Bewegung parallel zur Normalrichtung beispielsweise einer berührungssensitiven Bedienoberfläche des Bedienelements zuzulassen. Die Schaltungskinematik kann serielle oder auch parallele kinematische Glieder umfassen. Sie kann zur Stabilisierung der Linearbewegung auch eine Linearführung umfassen.

Der Hebel kann beispielsweise auf Dauer gelenkig mit dem Bedienelement verbunden sein. Vorzugsweise kann der Hebel aber derart gelenkig mit dem Bedienelement verbunden sein, dass der Hebel und das Bedienelement Strukturelemente aufweisen, die lediglich ineinander einsetzbar sind und aufeinander abrollen können. Die Verbindung des Hebels mit dem Bedienelement kann sich mit anderen Worten vorzugsweise also aus der kinematischen Bestimmtheit der zusammengesetzten Schaltungsanordnung insgesamt ergeben.

In bevorzugter Ausgestaltung der Schaltungsanordnung der Erfindung ist vorgesehen, dass die Schaltungsanordnung derart ausgelegt ist, dass eine Linearbewegung zwischen einer Ruhestellung und einer Schaltstellung ermöglicht wird, wobei in Ruhestellung die Rückstellkraft des Schaltelements den Hebel gegen das Trägerelement drückt und die Schaltstellung herbeiführbar ist, indem eine die Rückstellkraft überwindende Bedienkraft auf das Bedienelement aufgebracht wird, sodass der Hebel an dem Bedienelement zur Anlage kommt oder das Bedienelement an dem Trägerelement zur Anlage kommt.

Auf diese Weise ist der Bedienweg in einfacher Weise akkurat begrenzbar und die Rückstellkraft setzt die Schaltungsanordnung auch in Ruhestellung unter Vorspannung, was zu einer großen Stabilität führt und die Haptik verbessert. Ferner ist dadurch sichergestellt, dass der Bedienweg immer gleich groß ist, beziehungsweis immer voll ausgenutzt wird.

In bevorzugter Ausgestaltung der Schaltungsanordnung der Erfindung ist vorgesehen, dass das Trägerelement ein Anschlagelement umfasst, auf dem der Hebel in Ruhestellung zur Anlage kommt.

Dies vereinfacht signifikant die Auslegung der Schaltungskinematik.

In weiterhin bevorzugter Ausgestaltung der Schaltungsanordnung der Erfindung ist vorgesehen, dass der Hebel in Ruhestellung parallel zu dem Trägerelement und dem Bedienelement orientiert ist.

Dies vereinfacht ebenfalls signifikant die Auslegung der Schaltungskinematik. Zudem ist auf diese Weise eine flächige Anlage des Hebels auf dem Trägerelement möglich und die Begrenzung des Bedienwegs dadurch nochmals in ihrer Genauigkeit erhöht.

Der Hebel weist in der anderen Richtung einen Endabschnitt auf, der mit einem

Verzahnungsprofil versehen ist und, die Schaltungskinematik einen weiteren Hebel umfasst, der komplementär zu dem Hebel ausgebildet und kinematisch spiegelbildlich zu diesem angeordnet und gelagert ist und dessen Verzahnungsprofil mit dem Verzahnungsprofil des Hebels im Eingriff ist.

Der Begriff "spiegelbildlich" umfasst hier insbesondere den Umstand, dass der weitere Hebel sich ebenfalls von seinem Kipppunkt aus in eine Richtung und eine andere Richtung erstreckt, die zu der einen und anderen Richtung des oben bereits beschriebene Hebels jeweils gegenläufig sind. Der Kipppunkt des weiteren Hebels ist ebenfalls an dem Trägerelement befestigt und der weitere Hebel ist in seiner einen Richtung gelenkig mit dem Bedienelement verbunden. Vorzugsweise sind der Hebel und der weitere Hebel baulich identisch, was den Herstellungsaufwand reduziert.

Grundsätzlich kann auch zwischen dem weiteren Hebel und dem Bedienelement ein mechanisches Schaltelement vorgesehen sein (in diesem Fall entlang der anderen Richtung des anderen Hebels). Vorzugsweise ist aber nur das eine oben beschriebene Schaltelement vorhanden, da dessen Rückstellkraft über das Verzahnungsprofil auch auf den weiteren Hebel wirken kann.

Das mechanische Betriebsverhalten der Schaltungsanordnung lässt sich somit besonders präzise auslegen und die Komplexität wird reduziert. Insbesondere wird eine sehr genaue Linearbewegung erreicht, ohne dass der Bediener merkt, dass lediglich ein Schaltelement vorgesehen ist.

In weiterhin bevorzugter Ausgestaltung der Schaltungsanordnung der Erfindung ist vorgesehen, dass das Trägerelement ein Anschlagelement umfasst, auf dem der Hebel und der weitere Hebel in Ruhestellung zur Anlage kommen.

Da mit anderen Worten für beide Hebel eine gemeinsame Ablagefläche zur Verfügung steht, wird das Betriebsverhalten der Schaltungskinematik verbessert und die Herstellung ist mit geringem Aufwand möglich, als im Falle von individuellen Ablageflächen.

In weiterhin bevorzugter Ausgestaltung der Schaltungsanordnung der Erfindung ist vorgesehen, dass die Schaltungsanordnung derart ausgelegt ist, dass die Linearbewegung maximal 0,1 mm bis 0,5 mm beträgt und dass eine Bedienkraft, die zur Überwindung der Rückstellkraft auf das Bedienelement aufgebracht werden muss, 0,6 N bis 15 N beträgt.

Vorzugsweise beträgt die Linearbewegung maximal 0,3 mm bis 0,5 mm, besonders bevorzugt 0,15 mm bis 0,2 mm. Die Rückstellkraft beträgt bevorzugt 3,2 N bis 3,5 N, besonders bevorzugt 3,26 N bis 3,45 N.

Versuche der Anmelderin haben ergeben, dass sich unter diesen Randbedingungen eine besonders gleichmäßige erforderliche Rückstellkraft bei sehr geringem Bedienweg erzielen lässt.

In weiterhin bevorzugter Ausgestaltung der Schaltungsanordnung der Erfindung ist vorgesehen, dass das berührungssensitive Bedienelement ein Touchdisplay umfasst und das mechanische Schaltelement einen Taster umfasst.

Ein weiterer Aspekt der Erfindung betrifft ein Bediensystem, umfassend eine erfindungsgemäße Schaltungsanordnung gemäß der vorhergehenden Beschreibung sowie eine Steuergerät, wobei das Steuergerät ausgebildet ist, auf Basis eines Signals eines berührungssensitiven Bedienelements der Schaltungsanordnung eine Funktion zu selektieren und die selektierte Funktion auf Basis eines Signals eines mechanischen Schaltelements der Schaltungsanordnung auszulösen.

Das Steuergerät kann auch in das Bedienelement integriert sein. Das Bediensystem ist vorzugsweise für ein Fahrzeug ausgebildet, beispielsweise für ein Kraftfahrzeug.

Die Funktion kann beispielsweise eine Gangwahlschaltung, eine Mittelkonsole, eine Dachkonsole, eine Tür, ein ABT oder auch eine beliebige andere Schaltfunktion, bei der ein haptisches Feedback gewünscht ist.

Ein weiterer Aspekt der Erfindung betrifft ein Fahrzeug, umfassend eine erfindungsgemäße Schaltungsanordnung und/oder ein erfindungsgemäßes Bediensystem gemäß der vorhergehenden Beschreibung.

Vorzugsweise handelt es sich um ein Kraftfahrzeug.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: eine erfindungsgemäße Schaltungsanordnung in einer Explosionsdarstellung;
- Figuren 2, 3: die Schaltungsanordnung aus Figur 1 in prinzipskizzenhafter Darstellung; und
- Figur 4: ein erfindungsgemäßes Fahrzeug mit einem erfindungsgemäßen Bediensystem.

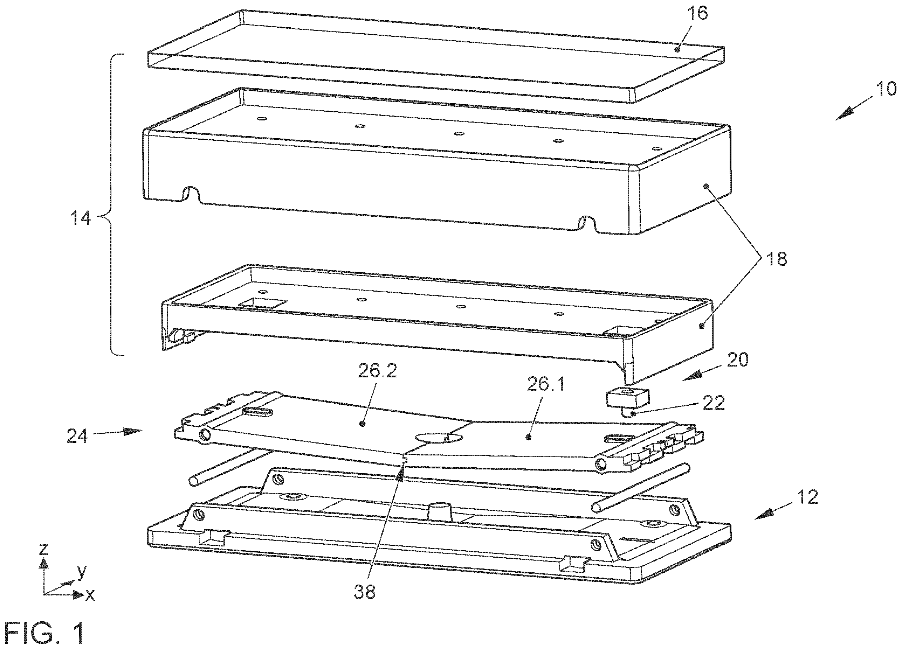

Figur 1 zeigt eine erfindungsgemäße Schaltungsanordnung 10 in einer Explosionsdarstellung.

Die Schaltungsanordnung 10 umfasst ein Trägerelement 12.

Weiterhin umfasst die Schaltungsanordnung 10 ein berührungssensitives Bedienelement 14. Das Bedienelement 14 umfasst eine Baugruppe mit einem Touchdisplay 16 und einem mehrteiligen Gehäuse 18 und bildet mit diesen ein steifes Modul.

Zwischen dem Bedienelement 14 und dem Trägerelement 12 ist ein mechanisches Schaltelement 20 angeordnet. Dieses umfasst einen Taster 22, der unter Überwindung einer Rückstellkraft R eindrückbar ist und dann ein Signal auszugeben vermag.

Weiterhin umfasst die Schaltungsanordnung 10 eine Schaltungskinematik 24, die einen Hebel 26.1 und einen weiteren Hebel 26.2 aufweist.

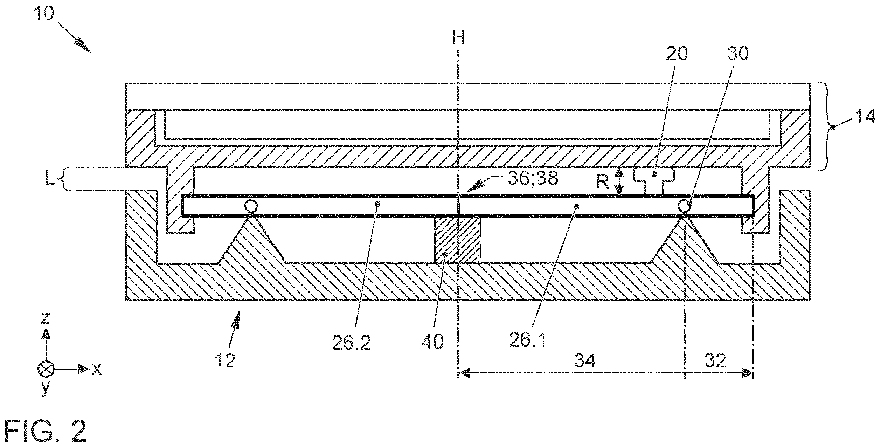

Zur weiteren Beschreibung der Schaltungsanordnung 10 wird nun auf Figur 2 bezuggenommen, wo die Schaltungsanordnung 10 aus Figur 1 in prinzipskizzenhafter Darstellung gezeigt ist.

Zu erkennen sind die beschriebenen Elemente der Schaltungsanordnung 10: das Trägerelement 12, das Bedienelement 14, das mechanische Schaltelement 20 sowie der Hebel 26.1 und der weitere Hebel 26.2.

Der Hebel 26.1 umfasst einen Kipppunkt 30, in dem der Hebel 26.1 gelenkig an dem Trägerelement 12 befestigt ist. Ausgehend von dem Kipppunkt 30 erstreckt sich der Hebel 26.1 in eine Richtung 32 und in eine andere Richtung 34.

In der einen Richtung 32 ist der Hebel 26.1 gelenkig mit dem Bedienelement 14 verbunden. In der anderen Richtung 34 erstreckt sich der Hebel 26.1 bis zu einem Endabschnitt 36.

Am Endabschnitt 36 grenzen der Hebel 26.1 und der weitere Hebel 26.2 aneinander an. Der weitere Hebel 26.2 ist zu dem Hebel 26.1 komplementär ausgebildet. In diesem Beispiel ist der weitere Hebel 26.2 baulich mit dem Hebel 26.1 identisch und kinematisch spiegelbildlich angeordnet und gelagert, bezogen auf die lediglich zur Erklärung gezeigte Hilfsebene H. Dort, wo die Hebel 26.1, 26.2 im Endabschnitt 36 aneinander angrenzen, umfassen sie jeweils ein Verzahnungsprofil 38 (vergleiche Figur 1), die miteinander im Eingriff sind.

Das Trägerelement 12 umfasst ein Anschlagelement 40, auf dem der Hebel 26.1 und der weitere Hebel 26.2 zur Anlage gebracht werden können.

Zwischen dem Hebel 26.1 und dem Bedienelement 14 ist das mechanische Schaltelement 20 angeordnet. Bezogen auf den Kipppunkt 30 des Hebels 26.1 ist das mechanische Schaltelement 20 entlang der anderen Richtung 34 angeordnet.

Das Bedienelement 14 und das Trägerelement 12 sind nun in einer Linearbewegung L relativ zueinander verlagerbar. Der Einfachheit halber wird zur weiteren Erklärung angenommen, dass das Trägerelement 12 statisch an einem nicht gezeigten Umweltsystem befestigt ist. Demnach ist das Bedienelement 14 in der Linearbewegung L auf das Trägerelement 12 linear zu verlagerbar oder von diesem linear weg verlagerbar.

In dem in Figur 2 gezeigten Zustand ist die Schaltungsanordnung 10 in einer Ruhestellung gezeigt, in der der Hebel 26.1 und der weitere Hebel 26.2 auf dem Anschlagelement 40 zur Anlage gebracht sind. Das mechanische Schaltelement 20 ist in diesem Beispiel an dem Bedienelement 14 befestigt. In der Ruhestellung wirkt die Rückstellkraft R als Vorspannkraft zwischen dem Bedienelement 14 und dem Hebel 26.1. Es bewirkt somit die sichere Anlage der Hebel 26.1, 26.2 auf dem Anschlagelement 40 und das Bedienelement 14 befindet sich am oberen Ende (in z-Richtung) der Linearbewegung L. Durch Positionierung des mechanischen Schaltelements 20 entlang der anderen Richtung 34 kann eine Übersetzung eingestellt werden, mit der die Rückstellkraft R das Bedienelement 14 über die Hebel 26.1, 26.2 in der Linearbewegung L nach oben drückt.

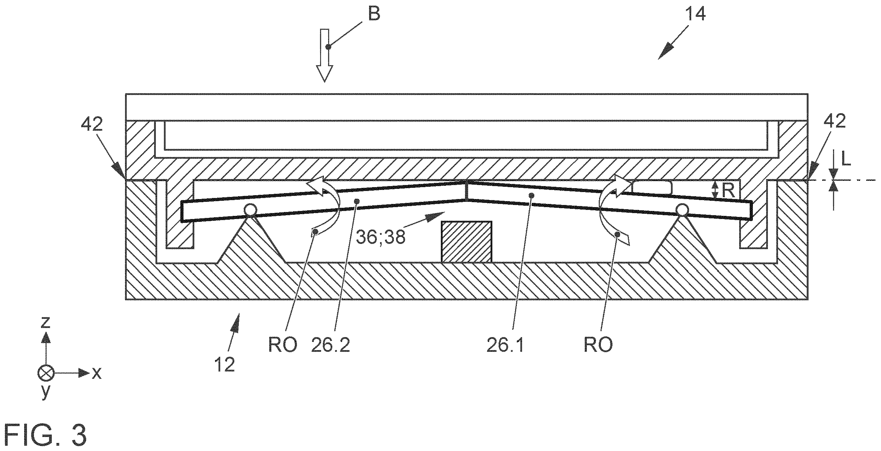

Unter Bezugnahme auf Figur 3 wird nachstehend erklärt, wie die Schaltungsanordnung 10 in der Linearbewegung L zwischen der Ruhestellung und einer Schaltstellung (die in Figur 3 gezeigt ist) verlagert werden kann. Die Linearbewegung L entspricht hier also einem Bedienweg. Abgesehen vom in Figur 3 gezeigten Betriebszustand entsprechen alle Elemente denen der Figur 2, sodass diese nicht im Detail nochmals beschreiben werden.

In Figur 3 ist ersichtlich, dass eine Bedienkraft B, beispielsweise durch einen Bediener, auf das Bedienelement 14 ausgeübt wird. Durch die Bedienkraft B wird die Schaltungsanordnung 10 aus der Ruhestellung (Figur 2) in die Schaltstellung überführt. In der Schaltstellung befindet sich das Bedienelement 14 am unteren Ende (in z-Richtung) der Linearbewegung L und kommt an dem Trägerelement 12 in einem Anlagebereich 42 zur Anlage. In anderen Ausführungsbeispielen können auch die Hebel 26.1, 26.2 im Endabschnitt 36 an dem Bedienelement 14 zur Anlage kommen.

Damit die Schaltungsanordnung 10 von der Ruhestellung in die Schaltstellung überführbar ist, muss die Rückstellkraft R durch die Bedienkraft B unter Berücksichtigung der Übersetzung durch die Schaltungskinematik 24 überwunden werden. Die Übersetzung kann durch Positionierung des mechanischen Schaltelements 20 entlang der anderen Richtung 34 des Hebels 26.1 eingestellt werden.

Wird die Rückstellkraft R durch die Bedienkraft B überwunden, so erfolgt eine Rotationsbewegung RO der Hebel 26.1, 26.2. Durch das Verzahnungsprofil 38 ist sichergestellt, dass beide Hebel 26.1, 26.2 sich absolut synchron bewegen. Es spielt somit keine Rolle, wo genau die Bedienkraft B auf das Bedienelement 14 einwirkt.

Sobald die Bedienkraft B soweit reduziert wird, dass sie die Rückstellkraft R nicht mehr überwinden kann, kehrt die Schaltungsanordnung 10 in die in Figur 2 gezeigte Ruhestellung zurück, in der die Hebel 26.1, 26.2 im vorliegenden Beispiel parallel zu dem Trägerelement 12 und dem Bedienelement 14 orientiert sind.

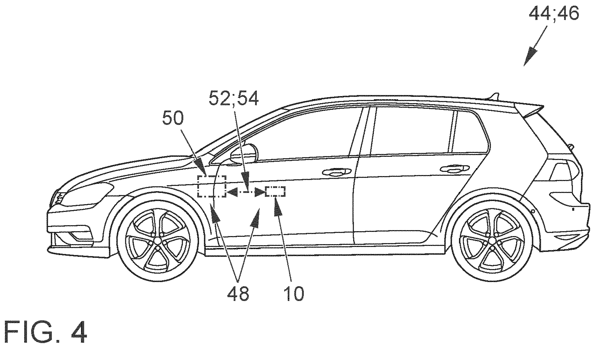

In Figur 4 ist ein erfindungsgemäßes Fahrzeug 44 gezeigt, bei dem es sich exemplarisch um ein Kraftfahrzeug 46 handelt.

Das Fahrzeug 44 ist mit einem erfindungsgemäßen Bediensystem 48 ausgestattet, welches eine erfindungsgemäße Schaltungsanordnung 10 umfasst, die beispielsweise jener der Figuren 1 bis 3 entsprechen kann.

Das Bediensystem 48 umfasst ein Steuergerät 50. Das Steuergerät 50 ist ausgebildet, auf Basis eines Signals 52 eine Funktion des Fahrzeugs 44 zu selektieren. Das Signal 52 wird durch ein berührungssensitives Bedienelement 14 der Schaltungsanordnung 10 erzeugt, wenn es beispielsweise durch einen Bediener berührt wird.

Das Steuergerät 50 ist ferner ausgebildet, die selektierte Funktion auf Basis eines Signals 54 auszulösen. Das Signal 54 wird durch ein mechanisches Schaltelement 20 der Schaltungsanordnung 10 erzeugt, wenn, wie in Figur 3 gezeigt, die Schaltungsanordnung 10 aus der Ruhestellung in die Schaltstellung übergegangen ist und somit das mechanische Schaltelement 20 durchschaltet.

### Bezugszeichenliste

- 10: Schaltungsanordnung
- 12: Trägerelement
- 14: Bedienelement
- 16: Touchdisplay
- 18: Gehäuse
- 20: Schaltelement
- 22: Taster
- 24: Schaltungskinematik
- 26.1: Hebel
- 26.2: weiterer Hebel
- 30: Kipppunkt
- 32: eine Richtung
- 34: andere Richtung
- 36: Endabschnitt
- 38: Verzahnungsprofil
- 40: Anschlagelement
- 42: Anlagebereich
- 44: Fahrzeug
- 46: Kraftfahrzeug
- 48: Bediensystem
- 50: Steuergerät
- 52: Signal
- 54: Signal

## Patentansprüche

1. Schaltungsanordnung (10), umfassend wenigstens:
- ein Trägerelement (12);
- ein berührungssensitives Bedienelement (14);
- ein mechanisches Schaltelement (20), das zwischen dem Bedienelement (14) und dem Trägerelement (12) angeordnet ist und das eine Rückstellkraft (R) zu erzeugen vermag; und
- eine Schaltungskinematik (24), über die das Bedienelement (14) und das Trägerelement (12) in einer Linearbewegung (L) relativ zueinander verlagerbar sind, wobei die Schaltungskinematik (24) einen Hebel (26.1) umfasst, der sich von seinem Kipppunkt (30) aus in eine Richtung (32) und eine andere Richtung (34) erstreckt und der Kipppunkt (30) des Hebels (26.1) an dem Trägerelement (12) befestigt ist und der Hebel (26.1) in der einen Richtung (32) gelenkig mit dem Bedienelement (14) verbunden ist, der Hebel (26.1) in der anderen Richtung (34) einen Endabschnitt (36) aufweist, der mit einem Verzahnungsprofil (38) versehen ist und die Schaltungskinematik (24) einen weiteren Hebel (26.2) umfasst, der komplementär zu dem Hebel (26.1) ausgebildet und kinematisch spiegelbildlich zu dem Hebel (26.1) angeordnet und gelagert ist und dessen Verzahnungsprofil (38) mit dem Verzahnungsprofil (38) des Hebels (26.1) im Eingriff ist,
**dadurch gekennzeichnet, dass**
das mechanische Schaltelement (20) entlang der anderen Richtung (34) zwischen dem Hebel (26.1) und dem Bedienelement (14) angeordnet ist, wobei das Schaltelement (20) nicht im Bereich eines Endabschnitts (36) des Hebels (26.1) angeordnet ist.

2. Schaltungsanordnung (10) nach Anspruch 1, **dadurch gekennzeichnet, dass** die Schaltungsanordnung (10) derart ausgelegt ist, dass eine Linearbewegung (L) zwischen einer Ruhestellung und einer Schaltstellung ermöglicht wird, wobei in Ruhestellung die Rückstellkraft (R) des Schaltelements (20) den Hebel (26.1) gegen das Trägerelement (12) drückt und die Schaltstellung herbeiführbar ist, indem eine die Rückstellkraft (R) überwindende Bedienkraft (B) auf das Bedienelement (14) aufgebracht wird, sodass der Hebel (26.1) an dem Bedienelement (14) zur Anlage kommt oder das Bedienelement (14) an dem Trägerelement (12) zur Anlage kommt.

3. Schaltungsanordnung (10) nach Anspruch 2, **dadurch gekennzeichnet, dass** das Trägerelement (12) ein Anschlagelement (40) umfasst, auf dem der Hebel (26.1) in Ruhestellung zur Anlage kommt.

4. Schaltungsanordnung (10) nach Anspruch 3, **dadurch gekennzeichnet, dass** der Hebel (26.1) in Ruhestellung parallel zu dem Trägerelement (12) und dem Bedienelement (14) orientiert ist.

5. Schaltungsanordnung (10) nach einem der vorhergehenden Ansprüche, **dadurch gekennzeichnet, dass** auf dem Anschlagelement (40)der Hebel (26.1) und der weitere Hebel (26.2) in Ruhestellung zur Anlage kommen.

6. Schaltungsanordnung (10) nach einem der vorhergehenden Ansprüche, **dadurch gekennzeichnet, dass** die Schaltungsanordnung (10) derart ausgelegt ist, dass die Linearbewegung (L) maximal 0,1 mm bis 0,5 mm beträgt und dass eine Bedienkraft (B), die zur Überwindung der Rückstellkraft (R) auf das Bedienelement (14) aufgebracht werden muss, 0,6 N bis 15 N beträgt.

7. Schaltungsanordnung (10) nach einem der vorhergehenden Ansprüche, **dadurch gekennzeichnet, dass** das berührungssensitive Bedienelement (14) ein Touchdisplay (16) umfasst und das mechanische Schaltelement (20) einen Taster (22) umfasst.

8. Bediensystem (48), umfassend eine Schaltungsanordnung (10) nach einem der vorhergehenden Ansprüche sowie ein Steuergerät (50), wobei das Steuergerät (50) ausgebildet ist, auf Basis eines Signals (52) eines berührungssensitiven Bedienelements (14) der Schaltungsanordnung (10) eine Funktion zu selektieren und die selektierte Funktion auf Basis eines Signals (54) eines mechanischen Schaltelements (20) der Schaltungsanordnung (10) auszulösen.

9. Fahrzeug (44), umfassen eine Schaltungsanordnung (10) nach einem der Ansprüche 1 bis 7 und/oder ein Bediensystem (48) nach Anspruch 8.

## Claims

1. Switching arrangement (10) comprising at least:
- one support element (12);
- one touch-sensitive operating element (14);
- one mechanical switching element (20) which is disposed between the operating element (14) and the support element (12) and which is able to generate a restoring force (R); and
- one switching kinematics unit (24) by way of which the operating element (14) and the support element (12) are repositionable relative to one another in a linear movement (L),
wherein the switching kinematics unit (24) comprises a lever (26.1) which from the tilting point (30) thereof extends in one direction (32) and another direction (34), and the tilting point (30) of the lever (26.1) is fastened to the support element (12), and the lever (26.1) in the one direction (32) is connected to the operating element (14) in an articulated manner, the lever (26.1) in the other direction (34) has an end portion (36) which is provided with a toothed profile (38), and the switching kinematics unit (24) comprises a further lever (26.2) which is configured so as to be complementary to the lever (26.1) and is disposed and mounted so as to be kinematically mirror-inverted to the lever (26.1), and the toothed profile (38) of said lever engages with the toothed profile (38) of the lever (26.1),
**characterized in that**
the mechanical switching element (20) along the other direction (34) is disposed between the lever (26.1) and the operating element (14), wherein the switching element (20) is not disposed in the region of an end portion (36) of the lever (26.1).

2. Switching arrangement (10) according to Claim 1, **characterized in that** the switching arrangement (10) is conceived in such a manner that a linear movement (L) between a resting position and a switching position is enabled, wherein in the resting position the restoring force (R) of the switching element (20) presses the lever (26.1) against the support element (12) and the switching position is able to be brought about **in that** an operating force (B) that overcomes the restoring force (R) is applied to the operating element (14) such that the lever (26.1) comes to bear on the operating element (14), or the operating element (14) comes to bear on the support element (12).

3. Switching arrangement (10) according to Claim 2, **characterized in that** the support element (12) comprises a detent element (40) on which the lever (26.1) comes to bear in the resting position.

4. Switching arrangement (10) according to Claim 3, **characterized in that** the lever (26.1) in the resting position is oriented parallel to the support element (12) and the operating element (14).

5. Switching arrangement (10) according to one of the preceding claims, **characterized in that** the lever (26.1) and the further lever (26.2) come to bear on the detent element (40) in the resting position.

6. Switching arrangement (10) according to one of the preceding claims, **characterized in that** the switching arrangement (10) is conceived in such a manner that the linear movement (L) is at most 0.1 mm to 0.5 mm and that an operating force (B) which has to be applied to the operating element (14) in order to overcome the restoring force (R) is 0.6 N to 15 N.

7. Switching arrangement (10) according to one of the preceding claims, **characterized in that** the touch-sensitive operating element (14) comprises a touchscreen (16), and the mechanical switching element (20) comprises a pushbutton (22).

8. Operating system (48) comprising a switching arrangement (10) according to one of the preceding claims and a control apparatus (50), wherein the control apparatus (50) is configured, based on a signal (52) of a touch-sensitive operating element (14) of the switching arrangement (10), to select a function and, based on a signal (54) of a mechanical switching element (20) of the switching arrangement (10), to trigger the selected function.

9. Vehicle (44) comprising a switching arrangement (10) according to one of Claims 1 to 7 and/or an operating system (48) according to Claim 8.

## Revendications

1. Agencement de commutation (10), comprenant au moins :
- un élément de support (12) ;
- un élément de commande tactile (14) ;
- un élément de commutation mécanique (20) qui est disposé entre l'élément de commande (14) et l'élément de support (12) et qui est capable de générer une force de rappel (R) ; et
- un moyen cinématique de commutation (24) qui permet de décaler l'élément de commande (14) et l'élément de support (12) l'un par rapport à l'autre dans un mouvement linéaire (L), dans lequel le moyen cinématique de commutation (24) comprend un levier (26.1) qui s'étend à partir de son point de basculement (30) dans une direction (32) et dans une autre direction (34), et le point de basculement (30) du levier (26.1) est fixé à l'élément de support (12), et le levier (26.1) est relié à l'élément de commande (14) de manière articulée dans ladite une direction (32), le levier (26.1) présente dans l'autre direction (34) une partie d'extrémité (36) qui est munie d'un profil de denture (38), et le moyen cinématique de commutation (24) comprend un autre levier (26.2) qui est réalisé de manière complémentaire au levier (26.1) et est disposé ou monté de manière cinématique en miroir par rapport au levier (26.1), et dont l profil de denture (38) est en prise avec le profil de denture (38) du levier (26.1),
**caractérisé en ce que** l'élément de commutation mécanique (20) est disposé le long de l'autre direction (34) entre le levier (26.1) et l'élément de commande (14), dans lequel l'élément de commande (20) n'est pas disposé dans la zone d'une partie d'extrémité (36) du levier (26.1).

2. Agencement de commutation (10) selon la revendication 1, **caractérisé en ce que** l'agencement de commutation (10) est conçu de telle sorte qu'un mouvement linéaire (L) entre une position de repos et une position de commutation est possible, dans lequel, dans la position de repos, la force de rappel (R) de l'élément de commutation (20) pousse le levier (26.1) contre l'élément de support (12), et la position de commutation peut être obtenue **en ce qu'**une force de commande (B) surmontant la force de rappel (R) est exercée sur l'élément de commande (14) de sorte que le levier (26.1) vient en butée contre l'élément de commande (14) ou l'élément de commande (14) vient en butée contre l'élément de support (12).

3. Agencement de commutation (10) selon la revendication 2, **caractérisé en ce que** l'élément de support (12) comprend un élément de butée (40) sur lequel le levier (26.1) vient en butée dans la position de repos.

4. Agencement de commutation (10) selon la revendication 3, **caractérisé en ce que** dans la position de repos, le levier (26.1) est orienté en parallèle à l'élément de support (12) et à l'élément de commande (14) .

5. Agencement de commutation (10) selon l'une quelconque des revendications précédentes, **caractérisé en ce que** le levier (26.1) et l'autre levier (26.2) viennent en butée sur l'élément de butée (40) dans la position de repos.

6. Agencement de commutation (10) selon l'une quelconque des revendications précédentes, **caractérisé en ce que** l'agencement de commutation (10) est conçu de telle sorte que le mouvement linéaire (L) est au maximum de 0,1 mm à 0,5 mm, et **en ce qu'**une force de commande (B) qui doit être exercée sur l'élément de commande (14) pour surmonter la force de rappel (R) est de 0,6 N à 15 N.

7. Agencement de commutation (10) selon l'une quelconque des revendications précédentes, **caractérisé en ce que** l'élément de commande tactile (14) comprend un écran tactile (16) et l'élément de commutation mécanique (20) comprend un palpeur (22).

8. Système de commande (48), comprenant un agencement de commutation (10) selon l'une quelconque des revendications précédentes ainsi qu'un appareil de commande (50), dans lequel l'appareil de commande (50) est réalisé pour sélectionner une fonction sur la base d'un signal (52) d'un élément de commande tactile (14) de l'agencement de commutation (10), et pour déclencher la fonction sélectionnée sur la base d'un signal (54) d'un élément de commutation mécanique (20) de l'agencement de commutation (10).

9. Véhicule (44), comprenant un agencement de commutation (10) selon l'une quelconque des revendications 1 à 7 et/ou un système de commande (48) selon la revendication 8.
